# EUROPEAN PATENT APPLICATION

(11) **EP 2 801 757 A1**
(43) Date of publication of application: **12.11.2014**
(21) Application number: 12850963.5
(22) Date of filing: 16.11.2012
(51) Int. Cl.: F22B 33/18, F23G 5/027

(54) **ENERGY GENERATING COMPLEX**

(30) Priority: 21.11.2011 RU 2011146925
(71) Applicant: Silantyeva, Larisa Jakovlevna, Samara 443083 (RU)
(72) Inventor: Silantyeva, Larisa Jakovlevna, Samara 443083 (RU)
(74) Representative: Nesheva, Valentina Velikova
(86) International application number: PCT/RU2012/000947
(87) International publication number: WO 2013/077770

(57) **Abstract**

The energy generating complex relates to power engineering. The technical result is the generation of energy carriers in the form of electrical energy, hot water or steam and, additionally, in the form of cold or liquid fuel, with minimal external power consumption during the environmentally-friendly, waste-free processing of any organic raw material without harmful emissions into the atmosphere by means of an energy generating complex that is additionally equipped with: a fuel preparation unit with a system for the preparation and transportation of fuel, a source of gaseous fuel and a heater for viscous fuel which are connected via an additional burning device to the primary ignition burner of a gasification reactor; and is also equipped with a back-up separator and smoke exhauster mounted parallel to a working separator and smoke exhauster, and a unit for detoxifying ash and obtaining building materials, which is connected by an inlet to the gasification, regeneration and synthesis zone of the gasification reactor via an ash removal zone.

## Description

The power generating complex belongs to power engineering, and it is designed to produce energy resources in the form of electric energy, heat, cold, liquid fuel, and can be used for environmentally safe waste-free processing of renewable fuels and any organic materials in various industries.

There is an existing engineering decision, an application for an invention RU No. 2003100979, IPC 7 F23G 5/00, 13.01.2003, published on 20.07.2004 under the name "Industrial power plant using wood waste or peat for production motor oils and electric power" containing a metal reactor with activator and electrodes with metal bunker recessing upwards with a rotary valve for stocking with pulverized solid fuel, air supply pipe attached to its bottom and feeding device for removing slag, attached sequentially to the upper side of its body, conditioner with pipe for extracting the liquid fuel pipe and a neutralizer for discharging gaseous fuel, characterized in that it is provided with a combined gas generator plant with steam-and-air blow using wood waste or peat for generating producer gas and a gas turbine plant using producer gas for generating electric power.

This plant operates in a periodic mode in a cycle "loading a portion of fuel - processing-making a batch of producer gas - unloading of ash residue." Frequency of the plant operation and its performance are depending on cross-section of the combustion zone and volume of the fuel bowl.

In this plant, air pressurization is forced and provided by a fan, which leads to expansion of the combustion zone and increased production of generator gas, which leads to increased pressure in the gas generator and fire and explosion hazard, and emissions of the generator gas to the environment, impairing environmental health regulations.

Gas purification with water and solid filter units increases gas-dynamic losses, prevents full yield of producer gas, reduces performance of the plant, increases its fire and explosive hazard and prevents the use of produced gas even in gas burners due to insufficient degree of purification from solid and tarry substances.

Another known technical decision under the patent RU 2174611 C1, IPC 7 F01K 21/04, F01K 13/0000, 1/14, F23B 29.08.2000, published on 10/10/2001, "POWER GENERATING UNIT", which is used for generating electricity and heat.

Design of this power generating unit includes equipment for fuel, air and water preparation and supply, heating and water circulation and/or heat transfer agent, contains at least one electric generator and a gas generator in the form of a hollow combustion chamber.

The unit does not provide complete combustion of the fuel, leaving carbon residue, as fuel in the gas generator is subjected to forced heating, first by natural gas or fuel oil, and then by fuel gas produced during thermal decomposition in the absence of oxygen. In this design, most of the gas produced in the process is spent on fuel heating, and only temperature of fuel gas is used to generate electricity by means of expansion machines, which leads to increased amount of metal required for construction and low efficiency. The other part of the fuel gas spent for fuel heating fuel is emitted into the environment through a chimney flue.

The closest by its technical essence is "Gas-heat-electric power generating system" patent RU 2303192 dated 29.06.2006, published on 20.07.2007, IPC F22B33/18, C10J3/86, containing a feeder, gas reciprocating plant, steam and water plant, tank for distilled water and gas generator with water boiler, combustion chambers, producer gas heating, natural air heating, steam generation and regeneration zones, producer gas purification and producer gas extraction.

But this system operates only on solid fuel, cannot use waste containing high concentration of harmful substances as fuel, does not solve the problem of fuel preparation, generates producer gas in a two-stage process which makes its low calorific value of approximately under 1100 kcal/m³, has not-complete cycle of tar, water and ash residue recycling. The problem of the reliability of the entire system is not resolved.

The proposed design is purposed to produce energy in the form of electricity, hot water, steam, and additionally, in the form of cold, distilled water, fuel oil, with minimum consumption of energy, environmentally safe processing of organic raw material, without any harmful emissions into the atmosphere.

The performance target is achieved through the design of power generating system that contains a feeding device, power generating section, gasification reactor with water and steam boilers, with zones of combustion and gas regeneration, natural air heating, chamber for mixing and heating of a water-steam mixture, exhausting separator, cooler stabilizer; beyond that, the system is additionally provided with: a fuel preparation section with systems for fuel preparation and handling, with a source of gaseous fuel and viscous fuel heater, and connected through an additional burner with the primary ignition burner of the gasification reactor; standby exhausting separator, installed in tandem with the main one, with its entrance connected through the gas duct to the zone of gasification, regeneration and synthesis of the gasification reactor, and from inlet through the cooler stabilizer, to the inlets of the power generating section and the section for synthesis of hydrocarbons; section for ash detoxification and production of construction materials, connected with its inlet through ash removal zone with the zone of gasification, regeneration and synthesis of the gasification reactor.

Addition of fuel preparation section, containing a system for fuel preparation and handling, a source of gaseous fuel and viscous fuel heater connected through additional burning device with the primary ignition burner of the gasification reactor allows to process any organic raw materials, without harmful emissions into the environment.

Addition of a standby exhausting separator installed in a parallel line to the main one and connected by its inlet through the duct with the zone of gasification, synthesis and regeneration of the gasification reactor, and outlet through the stabilizer cooler, to the inlets of the power generating section and the section for synthesis of hydrocarbons, allowing to provide constant flow of synthesis gas for continuous operation of the power generation section. In case of failure of the drive of the main separator, or pressure drop at the outlet of the separator, the standby separator would be engaged.

Provision of the system with an additional section for ash detoxification and production of construction materials, with its inlet connected through the ash removal zone with the zone of gasification, synthesis and regeneration of the gasification reactor allows improving the environmental properties by reducing harmful emissions and waste disposal to landfills.

The power generating system is depicted in the flow chart, where the following parts are numbered: fuel preparation section (1), gasification reactor (2), section for synthesis gas preparation (3), power generating section (4), section for hydrocarbon synthesis (5), section for ash detoxification and its processing to construction materials (6), system for fuel preparation and handling (7), fuel gas source (8), viscous fuel heater (9), feeding device (10), fuel chamber (11), water boiler (12), steam boiler (13), chamber for mixing and heating of air-steam mixture (14), additional burner device (15), primary ignition burner (16), zone for gasification, regeneration and gas synthesis (17), ash removal zone (18), gas duct (19), main exhausting separator/cooler (20), standby exhausting separator/cooler (21), return water cooling zone (22), tar water condensate separator (23), stabilizer cooler (24), hot water to consumers (25), pumping station (26), air (27), electricity (28), heat (29), cold (30), synthetic motor hydrocarbon oils (31), synthetic materials (32), construction materials (33).

Power generating system is designed as follows.

Section for fuel preparation (1) is equipped with a fuel processing and handling system (7) and through automated valve of a feeder device (10) is connected to the fuel chamber (11) of the gasification reactor (2).

Section for fuel preparation (1) is additionally provided with a source of gas supply (8) and viscous fuel heater (9), connected through an additional burner device (15) to the primary ignition burner (16), connected with the zone (17) of the gasification reactor (2).

Gasification reactor (2) is provided with zone of gasification, regeneration and synthesis (17), water boiler (12), connected with the fuel chamber (12), and through the steam boiler (13) with the steam-air mixture mixing and heating chamber (14).

Section for synthesis gas preparation (3) is made in the form of parallel connection of systems through their inlets: gas duct (19), main exhausting separator/cooler, (20), and standby exhausting separator/cooler (21), being a standby device for the zone of gasification, regeneration and synthesis (17), and their outlets are connected by a cooler stabilizer (24) with inlets of the power generating section (4) and section for synthesis of hydrocarbons (5), which is connected by synthetic motor oil outlet (31) to the inlet of the power generation section (4).

The system is equipped with pumping station (26) connected to the zone of return water cooling (22), cooler stabilizer (24) and water boiler (12).

The air supply (27) is connected through the chamber of mixing and preheating of steam-air mixture (14) to the gasification reactor (2).

To the outlet of the zone (17) of the gasification reactor (2) and through the zone of ash removal (18), the section for ash detoxification and production of construction materials (6) is connected.

The power generating section (4) is connected with its inlet to the outlet of cooler stabilizer (24) of the section for preparation of synthesis gas (3) and the inlet of block (5), and the section for synthesis of liquid hydrocarbons is connected by its outlet for synthetic motor oil (31) with the power generating section (4).

The power generating system operates as follows.

The system is designed to produce energy during processing, as all kinds of organic waste (wood waste; waste of crop, livestock and poultry farming; organic wastes of various industries, shredded used tires, domestic solid waste, compacted sludge of treatment plants, medical waste processed for landfills and many more) and classical fuels (petroleum gas, natural gas, oil, oil sludge, coal, lignite, peat, wood, oil shale, etc.) to synthetic fuel gas (synthesis gas), which replaces the natural gas in operation of water-steam boilers, gas reciprocating power plants for heat and power generation, and it is also used for the synthesis of liquid hydrocarbons.

Operation of the system is primarily based on the auto-thermo-chemical method of decomposition of organic-containing substances into gas components using their underoxidation with oxygen, with the further application of the method of catalytic synthesis of hydrocarbons and gas laws of physics and chemistry. This means that the "fuel" is primarily exposed to burn-ing under lack of oxygen with production of inert gases as carbon dioxide and water steam, as well as atomic carbon unreacted with oxygen in the air. Atomic carbon participates in further reaction as a reagent, through which inert gases are forcibly driven, which in turn are reacting with carbon, forming combustible gases, hydrogen, carbon monoxide, and methane.

The design of the system provides a way of gasification including decomposition of toxins such as pesticides, dioxins, phenols, formaldehyde, which do not recovered to the previous condition, as it occurs in waste incineration plants, direct, horizontal and vortex gas reactors, pyrolysis furnaces, but go over the gas component, as technology gas undergoes quenching (rapid cooling), skipping the recovery temperature range of toxins.

In the fuel preparation section (1) provided with a fuel processing and handling system (7), irrespective of the type of raw materials, the feedstock is brought to a state suitable for loading by an automated rotary valve feeder (10), through the fuel chamber (11) and the gasification reactor (2) it is supplied to the zone of gas gasification, regeneration and synthesis (17), where, the water-steam mixture from mixing and heating chamber (14) produced from water from the boiler (12) converted in a steam boiler (13) to steam and mixed with the natural air (27). Excess of hot water (25) from the boiler (12) is supplied to the consumer.

Pumping station (26) supplies water to the zone of return water cooling (22), to the cooler stabilizer (24), for purification, and to the water boiler (12).

In the zone for gasification, regeneration and synthesis (17), viscous fuel is supplied from the heater (9), or gaseous fuel from the source (8) through an additional burner device (15) to the primary ignition burner (16).

The synthesized gas is exhausted through the duct (19) by vacuum created by one of smoke exhausting separators/coolers of the section for synthesis gas preparation (3) and through main smoke exhausting separator/cooler (20) or standby smoke exhausting separator/cooler (21) is supplied through cooler stabilizer (24), being already purified, to the power generating section (4) for production of heat (29), cold (30) and electric power (28).

Addition of a standby exhausting separator (21) installed in a parallel line to the main one (20) and connected by its inlet through the duct with the zone of gasification, synthesis and regeneration (17) of the gasification reactor (2), and outlet through the stabilizer cooler (24), to the inlets of the power generating section (4) and the section for synthesis of hydrocarbons (5), allowing to provide constant flow of synthesis gas for continuous operation of the power generation section (5). When a drive of the main separator (20) fails, or in case of pressure drop at the outlet of the separator, the standby separator (21) would be engaged.

Excess of synthesis gas is supplied to the section (5), where it is synthesized either to synthetic motor fuel (31) or to synthetic materials (32).

In order to meet the applicable environmental standards, the system is provided by a zone of ash removal (18) to the additional section (6) for detoxification and ash processing to construction materials (33), and the section for preparation of synthesis gas (3) is equipped with a tar water condensate separator (23).

The system processes solid, liquid and gaseous organic matter, producing synthetic gas with a calorific value of more than 1200 kcal, heat and electric power, cold, synthetic fuels, synthetic materials, and also neutralizes and recycles bottom ash into the end product.

As compared with similar equipment sold worldwide the proposed systems occupy a small area, have a small amount of metal required for construction and energy consumption, are not explosive, as they do not require high pressure to operate (similar equipment sold worldwide operates under pressure 20 bar) but underpressure of 0.02 atmosphere, makes no emissions to the environment, the exhaust gases after gas-reciprocating power plant and water-steam boiler meet the requirements of Euro-4.

Application of the system provides: reduction of harmful emissions and waste, contributing to the environment and public health; reduction in the number and area of waste landfills; implementation of quotas under the Kyoto Protocol; obtaining low cost energy resources; energy independence of industrial facilities; expansion of the activities of the enterprise with an excess of energy resources (development of new technologies, creation of new jobs, additional profits).

The technical effect is production of energy resources in the form of electric power, hot water, steam, and in addition, in the form of cold and liquid fuels, with a minimum consumption of external energy in an environmentally safe waste-free processing of any organic raw material, without harmful emissions to the atmosphere, by means of power generating system equipped with optional systems: a fuel preparation section with fuel preparation and handling system, a source of gaseous fuel and a heater for viscous fuel connected via an additional burner device with burner for primary ignition of the gasification reactor; standby smoke exhauster separator, installed in a parallel line to the main one, section for ash detoxification and production of construction materials, combined intake through ash removal zone with the zone of gasification, regeneration and synthesis of the gasification reactor.

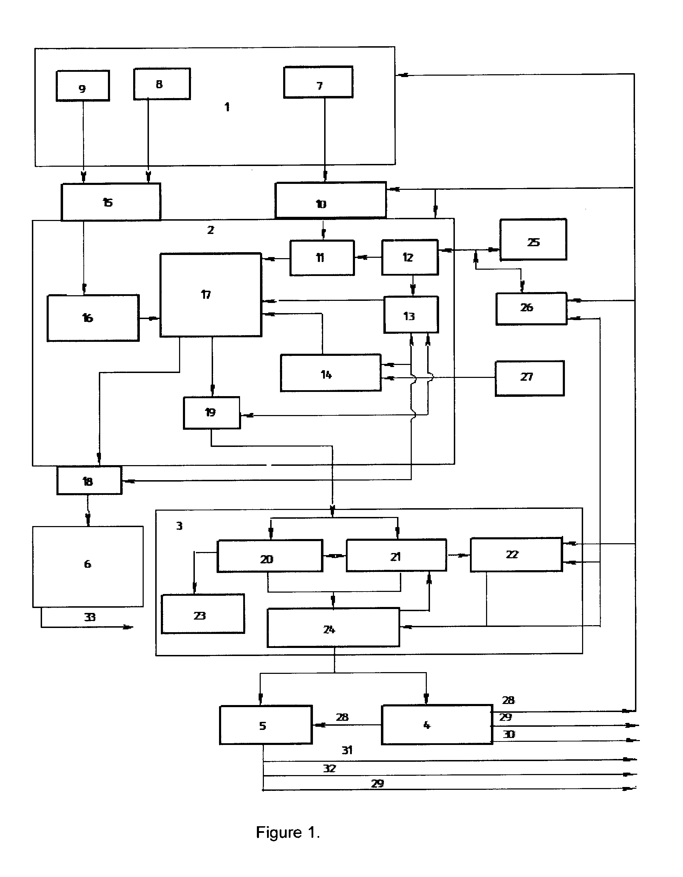

## Claims

1. The power generating system contains a feeding device, power generating section, gasification reactor with water and steam boilers, with zones of combustion and gas regeneration, heating of natural air, chamber for mixing and preheating of steam-air mixture, smoke exhausting separator, cooler stabilizer, **characterized by** the following advanced features: a fuel preparation section with systems for fuel preparation and handling, with a source of gaseous fuel and viscous fuel heater, and connected through an additional burner with the primary ignition burner of the gasification reactor; standby exhausting separator, installed in tandem with the main one, its entrance connected through the gas duct to the zone of gasification, regeneration and synthesis of the gasification reactor, and from inlet through the cooler stabilizer, to the inlets of the power generating section and the section for synthesis of hydrocarbons;

2. The power generating system is similar to p.1 but **characterized by** addition of section for ash detoxification and production of construction materials, connected with its inlet through the zone of ash removal with the zone for gasification, regeneration and synthesis of the gasification reactor.
